# EUROPEAN PATENT SPECIFICATION

(11) **EP 3 357 031 B1**
(45) Date of publication and mention of the grant of the patent: **27.10.2021**
(21) Application number: 15774902.9
(22) Date of filing: 30.09.2015
(51) Int. Cl.: G06Q 50/06, G01D 4/00, H04Q 9/00

(54) **MOBILE APP COMMUNICATION WITH UTILITY METER**
KOMMUNIKATION EINER MOBILEN APP MIT VERBRAUCHSZÄHLER
COMMUNICATION D'APPLICATION MOBILE AVEC COMPTEUR DE SERVICE PUBLIC

(43) Date of publication of application: 08.08.2018
(73) Proprietor: Danfoss A/S, 6430 Nordborg (DK)
(72) Inventor: MØLLESKOV BLÆSBJERG, Jeppe, DK-8000 Århus C (DK); MUNKEBO STEFFENSEN, Martin, 6430 Nordborg (DK); TAUSER A LAVA, Jakup, DK-6430 Nordborg (DK)
(74) Representative: Patentanwälte Olbricht Buchhold Keulertz
(86) International application number: PCT/EP2015/072591
(87) International publication number: WO 2017/054860

(56) References cited:
- WO-A1-2014/074071
- CN-U- 203 193 621
- GB-A- 2 326 002
- US-A1- 2014 167 978
- None

## Description

The present invention relates to a method for transferring information between an utility meter, namely a heat utility meter, and an electronic consumer communication device, namely a smartphone or a tablet computer, wherein transferring the information is performed via an electronic data transfer device of the utility meter.

Furthermore, the invention relates to an app adapted to run on the electronic consumer communication device. Additionally, the invention relates to the electronic consumer communication device adapted to transfer information between the utility meter and the electronic consumer communication device. Such a method is known from CN 203193621 U which shows a meter reading and payment field of a water/electricity/gas/heat meter and a conversion module enabling the wireless water/electricity/gas/heat meter to communicate with a mobile phone are known. The conversion module is provided in order to enable the wireless water/electricity/gas/heat meter to communicate with the mobile phone, which enables the mobile phone to communicate with the water/electricity/gas/heat meter via the conversion module, so as to allow users to make payments with the mobile phone.

WO 2014/074071 A1 describes an access point including a transmitter configured to transmit restricted access window parameters. The restricted access window parameters include at least one parameter selected from a list of parameters consisting of a type parameter indicating which time of restricted access window parameters is represented by the restricted access window parameters, a same group indicator parameter indicating whether a group field is present; and a channel indication presence parameter indicating whether a channel indication is present.

US 2014/0167978 A1 describes near field communications for utility meters, which are configured for operation, either in a stand-alone or utility network capacity.

GB 2 326 002 A describes remote reading of meters and sensors, wherein a utility meter is arranged in a meter pit in the ground. A radio communication device having a cover for covering the pit is provided, wherein the cover plate has at least one antenna for radio communication of meter readings from the meter to a remote reading unit and a battery for supplying power to a radio transceiver.

CN 203192084 U teaches a meter, more particularly the water/electricity/gas/heat meter with a Bluetooth function. The meter is able to communicate with mobile phones and shall offer convenience in making payments and use.

It is an object of the invention to allow an improved installation or maintenance of the utility meter.

The object of the invention is solved by the method as described in the outset in that the method comprises the step of
using the electronic consumer communication device in order to receive, on the electronic consumer communication device, status data provided by the utility meter, the information being transferred between the utility meter and the electronic consumer communication device via the electronic data transfer device of the utility meter comprising the status data, and
using the electronic consumer communication device in order to obtain instruction data from an instruction data base, the instruction data obtained from the instruction data base depending on the status data received from the utility meter, wherein the instruction database is stored on the electronic consumer communication device.

According to the invention, the method further comprises the steps of
using the electronic consumer communication device in order to pair a virtual address of the utility meter with a physical address of the utility meter via the electronic data transfer device , the information transferred comprising the virtual address of the utility meter,
using the electronic consumer communication device in order to transfer the virtual address of the utility meter from the utility meter via the electronic data transfer device of the utility meter to the electronic consumer communication device in order to pair the virtual address with the physical address in a joint address list stored on the electronic consumer communication device , and
providing a physical address list to the electronic consumer communication device prior to pairing and the step of adding the virtual address to the physical address list during pairing in order to create the joint address list.

By that, a comfortable and improved installation or maintenance of the utility meter is allowed. This may for example allow a lowering of costs or a more efficient planning of maintenance or installation of the utility meter.

Transferring in the sense of the present invention means sending or retrieving information from the utility meter, the electric consumer communication device receiving the information, and vice versa.

It is preferred that the electronic consumer communication device has restricted access to one or more parameters stored on the utility meter, the information transferred comprising access to the one or more parameters. Such a function allows to restrict access to only those parameters necessary to be accessed. Preferably one or more parameters are restricted to read only access. It is also preferred that one or more parameters are restricted to write only access. Preferably one or more parameters are not access restricted, thus full access is granted, including read and write access. Accordingly, the information transferred comprises preferably read access and/or write access to the one or more parameters. Different persons may have individual access rights to one or more parameters each. Thus, access control can be individualized or persons, preferably service technicians, may be grouped so as to allow individual access rights depending on the group to which the person is assigned to.

Preferably, the electronic consumer communication device provides one or more predetermined access levels in order to provide the restricted access to the one or more parameters stored on the utility meter. The parameters are controlled by the access levels. Preferably, each parameter is accessible in one or more of the access levels. Preferably there are between one to ten predetermined access levels. It is preferred that the number of access levels is larger than or equal to two. It is also preferred that the number of access levels is equal to or less than five. In a most preferred embodiment, there are three different access levels. An admin, for example of a district heating company, preferably can choose if the person accessing the utility meter should have read-only access, additional partial write access, or full access by selecting the access level. Depending on the access level preferably access to menus accessible on the electronic consumer communication device will be turned on or off. It is preferred that each parameter stored on the utility meter is assigned the access level for read and write each, the access levels being not necessarily the same. Thus, for example, the parameter may have a full read access but a limited write access preferably available for only a certain group of persons, preferably service technicians. It is preferred that in one predetermined access level the restricted access is read-only for all parameters. This helps to prevent manipulation of the parameters.

Preferably, the parameters stored on the utility meter are arranged in one or more parameter groups, each parameter group comprising two or more of the parameters, the electronic consumer communication device being used so as to access parameters of those parameter groups corresponding to a selected predetermined access level. Preferably, the utility meter is designed having eight different parameter groups. It is preferred that the parameter groups can be entered by triggering hardware keys and entering passwords.

It is preferred that the utility meter is designed such that each parameter in the utility meter is assigned to one or more of the parameter groups. Preferably, the person accessing the utility meter is allowed to access these parameters for which the access level on the consumer communication device corresponds to the parameter group. Preferably, even if the parameter is assigned for full access according to a setting in the electronic consumer communication device, full access to that parameter will still require a group permission provided on side of the utility meter. This may prevent fraudulous access to parameters stored on the utility meter due to hacking of the electronic consumer communication device. Preferably, the parameter may be assigned to a different group on demand, for example during a firmware update of the utility meter. It is preferred that a firmware update only occurs with providing a new utility meter. Thus, preferably already installed utility meters receive no firmware updates. With a firmware update it is preferred that an ID of the parameter is changed and the electronic consumer communication device obtains the new ID in order to adapt the access levels to the amended parameter groups. It is preferred that the parameter IDs are handled in a XML file containing all the parameter IDs. The XML file is preferably stored on the electronic consumer communication device.

Preferably, there is an individual XML file for each firmware version of the utility meter. It is preferred that the person, preferably the service technician, selects the type of utility meter prior to transferring information between the utility meter and the electronic consumer communication device. Thus, the XML file corresponding to the selected utility meter will be used in order to determine the parameter groups corresponding to an assigned access level. In a preferred method, the type and firmware version of the utility meter is automatically determined by the electronic consumer communication device so that a misconfiguration by the person using the electronic consumer communication device can be prevented. Preferably, each time a new firmware version of the utility meter is provided, the electronic consumer communication device receives an update with a new XML file supporting the new firmware version. Preferably, this is an automatic update, done without the person's involvement.

According to the invention, the method comprises the step of using the electronic consumer communication device in order to pair a virtual address of the utility meter with a physical address of the utility meter via the electronic data transfer device, the information transferred comprising the virtual address of the utility meter. In conventional maintenance processes, the pairing of the utility meter and physical addresses, preferably street addresses, is done by having a piece of paper with physical addresses and then writing the virtual address, preferably a serial number of the installed utility meter, next to the physical address by pen. The information is then entered into a central storage system after each workday. Such a method may need considerate involvement of the person, preferably the service technician, and thus writing errors or reading errors may easily occur. Thus, according to the invention, the electronic consumer communication device reads the serial number, which is a preferred virtual address, of the utility meter and pairs it with the physical address of the utility meter which is preferably pre-stored on the electronic consumer communication device. This may make the installation or maintenance faster and errors from manually entering the serial number are reduced since this information is automatically read from the utility meter. In some embodiments the person enters the physical address of the installed utility meter into the electronic consumer communication device and then pairs it to the virtual address, preferably serial number, of the utility meter by transferring the virtual address of the utility meter via the electronic data transfer device of the utility meter and to the electronic consumer communication device. Preferably, such automatically entered data is at a later time passed to the central storage system together with physical addresses copied to the electronic consumer communication device at an earlier time in the form of electronic data. The invention makes installation possible even if an installation at a certain physical address was not planned ahead and thus the physical address, preferably the street address, was not copied in the form of electronic data to the electronic consumer communication device prior to start of the maintenance work.

According to the invention, the method comprises the step of using the electronic consumer communication device in order to transfer the virtual address of the utility meter via the electronic data transfer device of the utility meter to the electronic consumer communication device in order to pair the virtual address with the physical address in a joint address list stored in the electronic consumer communication device. Such a joint address list may allow for a structurized and easy storage of paired virtual and physical addresses. Preferably the joint address list is a spread sheet stored on the electronic consumer communication device.

According to the invention, the method comprises the step of providing a physical address list to the electronic consumer communication device prior to pairing and the step of adding the virtual address to the physical address list during pairing in order to create the joint address list. By preparing the installation, for example from his home, and entering the physical addresses into a planner system, the person, preferably the service technician, enables the electronic consumer communication device to have access to the physical address information. Preferably, all physical addresses entered into the planner system are centrally stored in the control storage system and can be automatically retrieved by persons so as to enable them to work on the same joint address list. The electronic consumer communication device may then read the virtual address via the electronic data transfer device so to pair it with the physical address. Such a method may make the installation or maintenance faster and errors from typing the virtual address, for example the serial number of the utility meter, into the system is reduced since the virtual address is automatically read from the utility meter. Preferably, the joint address list is transferred to the central storage system by the service technician when an installation plan, preferably for a day, is completed. The central storage system preferably is a backend server of the district heating company. Preferably, data is transferred to the backend server via an internet connection as soon as the internet connection is available.

Preferably, the method comprises the step of using the electronic consumer communication device in order to transfer content of a display of the utility meter to a screen of the electronic consumer communication device such as to duplicate the content of the display on the screen, the information transferred comprising the content of the display. Sometimes, utility meters are situated at locations where the display can be difficult to read for the person accessing it. It may then be of advantage to use the electronic consumer communication device in order to transfer the content of the display of the utility meter to the screen of the electronic consumer communication device. Thus, the content of the display is duplicated, also called mirrored, to the screen via the electronic data transmission device of the utility meter. Preferably, the display is a liquid crystal display. Preferably, the screen of the electronic consumer communication device is a liquid crystal screen. Preferably, two or more menu lists of the utility meter display are duplicated and shown on the screen of the electronic consumer communication device.

Preferably, the method comprises the step of using the electronic consumer communication device for having a machine translation of the content of the display and displaying the machine-translated content of the display on the screen of the electronic consumer communication device. This allows for an easy and low-cost translation into local language. For example, the content of the display of the utility meter may be translated into a language that is understood by the person, preferably the service technician. This may allow a high flexibility in deploying utility meters with menus in a single language over countries in which different languages are used. It is preferred that the machine translation is performed on the electronic consumer communication device itself. Preferably the electronic consumer communication device comprises a dictionary, most preferably a multi-language dictionary so that translation is performed locally. In some embodiments though, the machine translation is performed remote from the electronic consumer communication device. Preferably the content of the display in such cases is forwarded to a web translation service where it is machine translated and the required translation is then returned to the electronic consumer communication device to be displayed on the screen of the electronic consumer communication device. This may allow a centralized maintenance of the dictionary.

It is preferred that the instruction data base is stored on the electronic consumer communication device. A preferred status data is an alarm issued by the utility meter. Thus, preferably the utility meter may supply an error message as the alarm via the electronic data transfer device. It is preferred that the electronic consumer communication device obtains the instruction data from the instruction data base corresponding to the error message in order to display a solution to a problem corresponding to the error message issued by the utility meter. Thus, it is preferred that the instruction data is provided as a written information, preferably as an extract from a handbook.

The instruction data base is preferably stored on the electronic consumer communication device. It is then preferred to update the instruction database by updating the app. But sometimes it is preferred that the instruction data base is stored remote from the electronic consumer communication device, preferably on a backend server of the district heating company or in a cloud service. This allows regular updating of the instruction data base without unnecessarily overloading the electronic consumer communication device with the instruction data base.

Preferably, the method comprises the step of using a wireless link between the electronic consumer communication device and the electronic data transfer device of the utility meter in order to transfer the information, the wireless link being preferably a Bluetooth link established between the electronic consumer communication device and the electronic data transfer device. In some embodiments the electronic data transfer device is a dongle connected to the utility meter such as to collect data from the utility meter. Preferably, a data connection between the dongle and the utility meter is an optical connection. The wireless link between the electronic consumer communication device and the electronic data transfer device may in some embodiments be provided by a wireless local area network, a mobile phone network, NFC, or infrared connection. In some embodiments a wired link between the electronic consumer communication device and the electronic data transfer device is used. The wired link may be provided via an ethernet cable, a USB connection, a coaxial cable of any other type of wire.

It is preferred that the method comprises the step of using the app on the electronic consumer communication device in order to transfer the information between the utility meter and the electronic consumer communication device. Apps may be easily distributed to the electronic consumer communication device. Also, apps may be easily adapted for new or improved types of utility meters. Instead of the app another type of program may be used if suitable for the given task.

Preferably, the electronic consumer service communication device is a dongle. Such devices may in principle be used by the person to obtain information from the utility meter via the electronic data transfer device. Thus, the electronic consumer communication device is adapted to establish the link between the electronic consumer communication device and the electronic data transfer device of the utility meter. For example, if the electronic data transfer device is a dongle comprising a Bluetooth adapter, the electronic consumer communication device has a corresponding Bluetooth transceiver adapted to communicate with the electronic data transfer device. The electronic data transfer device is preferably a dongle. It is preferred that the dongle and the utility meter comprise a magnetic interconnector such as to mount the dongle on the utility meter. The dongle preferably has a battery receptacle for receiving a battery for powering the dongle and/or the wireless link. Thus, a power supply for the dongle and/or the wireless link may be independent from a power supply for the utility meter. The utility meter preferably has an integrated optical eye and the electronic data transfer device is adapted to receive optical signals from the optical eye and to convert these optical signals into an information format transferable as the information between the utility meter and the electronic consumer communication device. The preferred utility meter comprises an ultrasonic flow-meter. Preferably, the utility meter comprises a battery socket so as to house a battery for powering the utility meter. A preferred utility meter is a heat utility meter. Other preferred utility meters are water, electricity and/or gas utility meters. Furthermore, it is preferred that the person applying the method is a service technician. Other preferred persons applying the method are a tenant of a building or an apartment, a landlord of a building or an apartment or a custodian of a building or an apartment. It is even more preferred that the service technician applies the method during installation and/or after installation of the utility meter, most preferably during installation and during a subsequent failure of the utility meter.

The object of the invention is furthermore solved by the app as described in the outset, the app providing the method claimed. Apps may be easily provided and adapted for different types of utility meters. Using apps on mobile phones is well known for other purposes. In the present case the app is for the first time adapted to be used for the novel method as described before.

In the following a detailed description of embodiments of the invention is given. Therefore, reference is made to the attached figures, in which:
- Fig. 1: illustrates an embodiment of the invention used by the service technician;
- Fig. 2: illustrates a first method according to the invention;
- Fig. 3: illustrates a second method according to the invention;
- Fig. 4: illustrates a third method according to the invention; and
- Fig. 5: illustrates a fourth method according to the invention.

Reference signs are introduced into the detailed description in order to improve readability of the claims. The reference signs are in no way meant to be limiting.

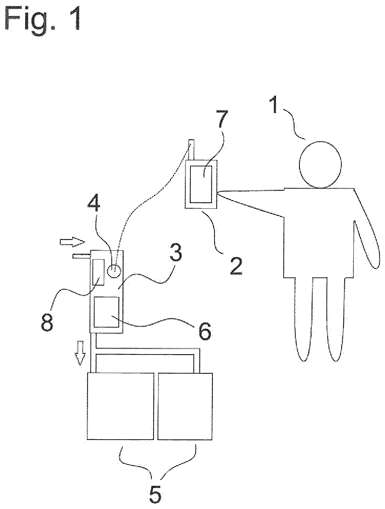

Fig. 1 shows the service technician 1, as an example for a preferred person, using the electronic consumer communication device 2 in order to transfer information between the heat utility meter 3, as an example for a preferred utility meter, and the electronic consumer communication device 2 via the electronic data transfer device 4 of the heat utility meter 3, as indicated by a dashed line. The heat utility meter 3 is battery powered. The electronic data transfer device 4 is battery powered. Each of the heat utility meter 3 and the electronic data transfer device 4 is powered by a dedicated battery so that the heat utility meter 3 does not need to share its battery with the electronic data transfer device 4 and vice versa. The heat utility meter 3 is mounted at a heating pipe leading to heater radiators 5. The electronic data transfer device 4 is mounted over the optical eye of the heat utility meter 3 via magnets. The heat utility meter 3 comprises the display 6 while the electronic consumer communication device 2 comprises the screen 7. A data handling unit 8 of the heat utility meter 3 comprises an information storage and a processing unit. The information storage in this embodiment is a non-volatile random access memory (NVRAM). The heat utility meter 3 comprises, in its information storage, a parameter storage in which several parameters are stored being assigned to a plurality of parameter groups. Each parameter group comprises two or more of the parameters. The service technician 1 uses the electronic consumer communication device 2, in this case the mobile phone having the screen 7, so as to access parameters of those parameter groups corresponding to the selected predetermined access level. Thus, the access levels control the parameters. Accordingly, the service technician 1 has the restricted access to one or more parameters stored on the heat utility meter 3. Thus, the information the service technician 1 transfers between the heat utility meter 3 and the electronic consumer communication device 2 comprises access to the one or more parameters stored in the different parameter groups. In some embodiments not shown and not forming part of the invention the electronic consumer communication device 2 is configured to perform at least some of the tasks of the data handling unit 8. Thus, data handling and/or processing may at least partially be moved to the electronic consumer communication device 2 in order to save energy in the utility meter 3, for example during installation.

In order to restrict the access to the one or more parameters the electronic consumer communication device 2 used by the service technician 1 provides one or more predetermined access levels. In this embodiment of the electronic consumer communication device 2, which does not form part of the invention, three different access levels are provided, namely read-only access, additional partial write access and full access. On the other hand, the heat utility meter 3 has eight different parameter groups. In the given example, a first parameter group is named "installation". Thus, the first parameter group comprises only parameters which are necessary for installation of the heat utility meter 3. The admin of the district heating company may now assign one of the three access levels in order to allow read-only, additional partial write or full access to the first parameter group. In the exemplary case given, the service technician 1 has the access level "full access" to the first parameter group. Thus, the service technician 1 may read and write the parameters of the first parameter group at "installation" level without any limitation. To the contrary, the service technician 1 in the present case has read only access to a second group of parameters. The second parameter group is called "factory" in this example and as the access level for the service technician 1 is limited to read only for this second group the service technician 1 may only read the parameters grouped in the second parameter group.

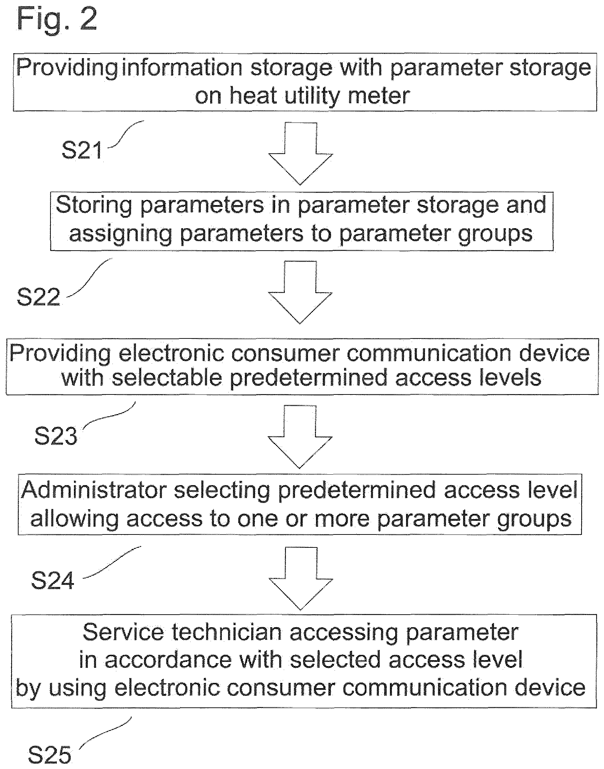

As illustrated in Fig. 2, the use of access levels on the side of the electronic consumer communication device 2 and parameter groups on the side of the heat utility meter 3 may be implemented as follows. In a first step (S21) the information storage with parameter storage is provided on the heat utility meter 3. Then, parameters stored in the parameter storage are assigned to parameter groups (S22). In addition the electronic consumer communication device 2 is provided with selectable predetermined access levels (S23). The admin of the district heating company selects a predetermined access level providing access to one or more of the parameter groups stored on the heat utility meter (S24). Finally, the service technician 1 accesses one or more parameters in accordance with the selected predetermined access level by using the electronic consumer communication device 2 (S25). Thus, he transfers information between the heat utility meter 3 and the electronic consumer communication device 2 via the electronic data transmission device 4 of the heat utility meter 3, by reading or writing one or more parameters.

Referring now back to Fig. 1, the electronic consumer communication device 2 is also adapted to pair the virtual address of the heat utility meter 3 with the physical address of the heat utility meter 3 via the electronic data transfer device 4, the information transferred comprising the virtual address of the heat utility meter 3. The information storage has a virtual address storage. The service technician 1 uses the electronic consumer communication device 2 in order to transfer the virtual address of the heat utility meter 3 from the heat utility meter 3 via the electronic data transfer device 4 of the heat utility meter 3 to the electronic consumer communication device 2 in order to pair the virtual address with the physical address in the joint address list stored on the electronic consumer communication device 2. In order to do so, he provided a physical address list to the electronic consumer communication device 2 prior to pairing. At a maintenance site, the service technician 1 then adds the virtual address to the physical address list during pairing in order to create the joint address list. At a later step, when he has internet access, the service technician 1 transfers the joint address list to the backend server of the district heating company. Thus, the risk of having writing errors compared to copying the virtual address by paper and pencil is reduced.

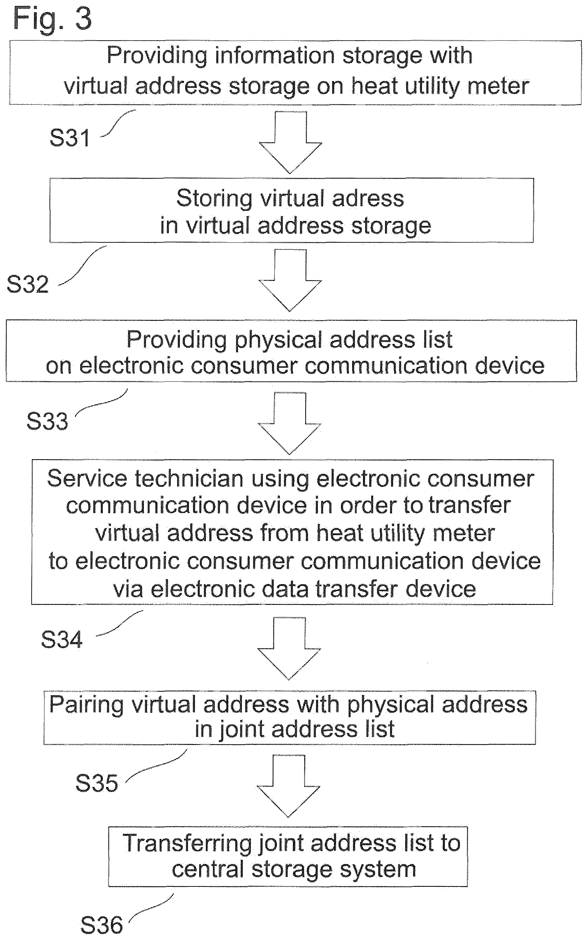

Fig. 3 gives an example of how pairing of virtual addresses with physical addresses can be implemented by a service technician 1 using an electronic consumer communication device 2. In a first step, the information storage of the heat utility meter 3 is provided with the virtual address storage (S31). In a further step, the virtual address is provided to the heat utility meter 3 (S32). Thus, the virtual address is stored in the information storage preferably during the production process at the factory of the heat utility meter 3. Then the physical address list is provided on the electronic consumer communication device 2 (S33). In this example, the service technician 1 transfers the physical address list as the spread sheet to the electronic consumer communication device 2 prior to entering the maintenance site. At the maintenance site, the service technician 1 connects the electronic consumer communication device 2 to the heat utility meter 3 by establishing the Bluetooth link to the electronic data transfer device 4 of the heat utility meter 3. The service technician 1 then transfers the virtual address from the heat utility meter 3 to the electronic consumer communication device 2 via the electronic data transfer device 4 by means of the Bluetooth connection (S34).

Then the virtual address is paired with the physical address in the joint address list (S35). In this example, the basis of the joint address list is the physical address list and the virtual address is added to the physical address list in order to form the joint address list. In a next step (not shown), the service technician 1 may transfer the joint address list to the central storage system, thus preferably to the backend server of the district heating company.

Coming now back to Fig. 1, the electronic consumer communication device 2 and the heat utility meter 3 are also adapted to transfer content of the display 6 of the heat utility meter 3 to the screen 7 of the electronic consumer communication device 2 such as to duplicate the content of the display 6 on the screen 7, the information transferred comprising the content of the display 6. Thus, the service technician 1 uses the electronic consumer communication device 2 in order to transfer content of the display 6 of the heat utility meter 3 to the screen 7 of the electronic consumer communication device 2 such as to duplicate the content of the display 6 on the screen 7, the information transferred comprising the content of the display 6. Furthermore, the service technician 1 uses the electronic consumer communication device 2 for having the machine translation of the content of the display 6 and displaying the machine translated content of the display 6 on the screen 7 of the electronic consumer communication device 2.

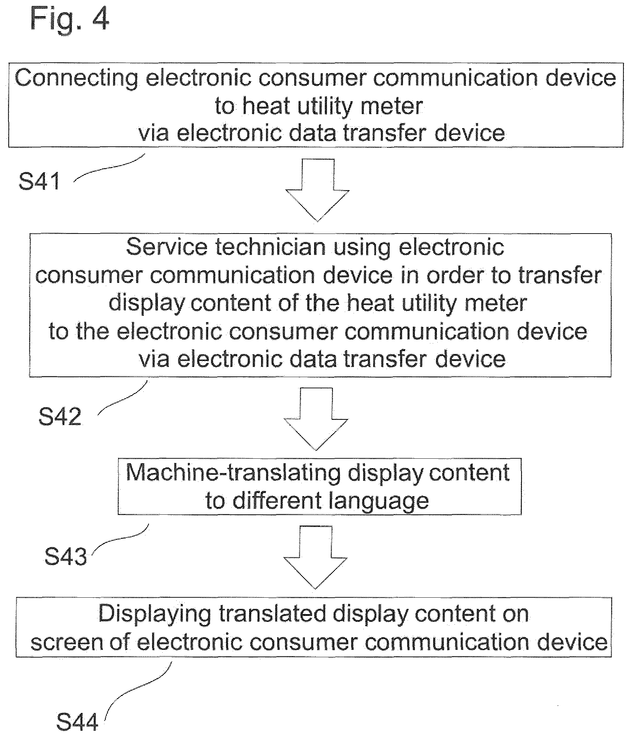

A method in which the display 6 of the heat utility meter 3 is duplicated to the screen 7 of the electronic consumer communication device 2 and also machine translated is given in Fig. 4. In this exemplary method, the service technician 1 connects the electronic consumer communication device 2 to the heat utility meter 3 via the electronic data transfer device 4 of the heat utility meter 3 by means of a Bluetooth connection (S41). Then the service technician 1 transfers display 6 content of the heat utility meter 3 to the electronic consumer communication device 2 via the electronic data transfer device 4 (S42). Before the content of the heat utility meter 3 display 6 is displayed on the screen 7, the content of the display 6 is machine translated on the electronic consumer communication device 2 to a language different from that of the one used on this display 6 (S43). Finally, the translated content of the display 6 is displayed on the screen 7 of the electronic consumer communication device 2 (S44).

Referring back to Fig. 1 again, the service technician 1 also uses the electronic consumer communication device 2 in order to receive, on the electronic consumer communication device 2, status data provided by the heat utility meter 3, the information being transferred between the heat utility meter 3 and the electronic consumer communication device 2 via the electronic data transfer device 4 of the heat utility meter 3 comprising the status data. Then the service technician 1 uses the electronic consumer communication device 2 in order to obtain the instruction data from the instruction data base, the instruction data obtained from the instruction data base depending on the status data received from the heat utility meter 3, the instruction data base being stored on the electronic consumer communication device 2. Thus, the heat utility meter 3 is adapted to provide the status data via the electronic data transfer device 4. In this example, the status data is an alarm comprising an error message. The error message is provided in form of an error code. Thus, the service technician 1 receives the error code via the electronic data transfer device 4 by using the electronic consumer communication device 2 in order to transfer information from the heat utility meter 3. The electronic consumer communication device 2 then compares the error code to entries in the instruction data base. The locally stored instruction data base thus provides the solution for solving an error corresponding to the error code provided by the heat utility meter 3. The locally stored instruction data base thus provides the instruction data to the electronic consumer communication device 2 and the electronic consumer communication device 2 displays the instruction data on the screen 7. Thus, the service technician 1 is enabled to conveniently solve errors signaled by the heat utility meter 3.

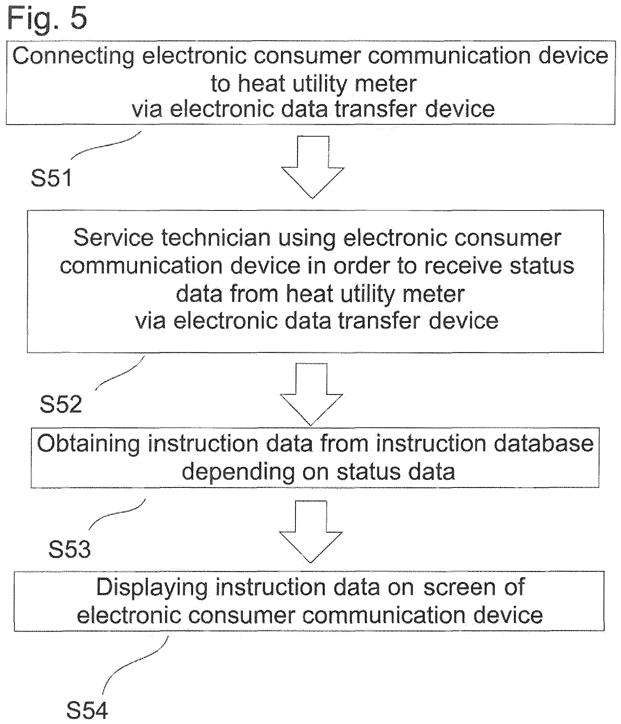

Referring now to Fig. 5, an exemplary use of receiving status data and obtaining instruction data is described. In a first step, the electronic consumer communication device 2 is connected to the heat utility meter 3, preferably by establishing the Bluetooth connection between the electronic data transfer device 4 of the heat utility meter 3 and the electronic consumer communication device 2 (S51). In a following step, the service technician 1 uses the connection in order to receive status data from the heat utility meter 3 on the electronic consumer communication device 2 (S52). Then, the service technician 1 uses the electronic consumer communication device 2 in order to obtain instruction data from the instruction data base, for example provided locally or in the cloud on the internet, depending on the status data provided by the heat utility meter 3, in this exemplary case the error code (S53). Finally, the service technician 1 uses the electronic consumer communication device 2 in order to display the instruction data received from the instruction data base on the screen 7 of the electronic consumer communication device 2 (S54).

To allow all the aforementioned method steps the electronic consumer communication device 2 comprises the app adapted to provide the method. It should be understood that, while in the given example the electronic consumer communication device 2 is the mobile phone, the person may use the smartphone, the tablet computer, or the laptop to transfer the information.

Furthermore, in the present invention the parameter storage and the virtual address storage may both be provided in the same information storage, thus sharing the NVRAM. In other embodiments there may be a separate information storage for each of them. Other embodiments not shown comprise transferring information with the electronic consumer communication device 2 from or to gas, water or electricity utility meters.

Thus, the detailed description shows that the use of the electronic consumer communication device 2 by the person transferring the information may lead to advantageous results during installation and maintenance of utility meters. No special device is needed for reading and programming the utility meter but the off-the-shelf electronic consumer communication device 2 with the app may be used. This may lower costs, reduce error frequency, and may facilitate installation or maintenance of utility meters at maintenance sites.

## Claims

1. A method for improving installation or maintenance of an utility meter (3), namely a heat utility meter, using transferring information between the utility meter (3), and an electronic consumer communication device (2), namely a smartphone or a tablet computer, to be used by a service technician, wherein transferring the information is performed via an electronic data transfer device (4) of the utility meter (3), wherein the method comprises the step of using the electronic consumer communication device (2) in order to receive, on the electronic consumer communication device (2), status data provided by the utility meter (3), the information being transferred between the utility meter (3) and the electronic consumer communication device (2) via the electronic data transfer device (4) of the utility meter (3) comprising the status data;
and
using the electronic consumer communication device (2) in order to obtain instruction data for the service technician from an instruction database, the instruction data obtained from the instruction database depending on the status data received from the utility meter (3), wherein the instruction database is stored on the electronic consumer communication device (2), **characterized in that** the method further comprises the steps of
using the electronic consumer communication device (2) in order to pair a virtual address of the utility meter (3) with a physical address of the utility meter (3) via the electronic data transfer device (4), the information transferred comprising the virtual address of the utility meter (3),
using the electronic consumer communication device (2) in order to transfer the virtual address of the utility meter (3) from the utility meter (3) via the electronic data transfer device (4) of the utility meter (3) to the electronic consumer communication device (2) in order to pair the virtual address with the physical address in a joint address list stored on the electronic consumer communication device (2), and
providing a physical address list to the electronic consumer communication device (2) prior to pairing and the step of adding the virtual address to the physical address list during pairing in order to create the joint address list.

2. The method according to claim 1, **characterized in that** the electronic consumer communication device (2) has a restricted access to one or more parameters stored on the utility meter (3), the information transferred comprising access to the one or more parameters.

3. The method according to claim 2, **characterized in that** the electronic consumer communication device (2) provides one or more predetermined access levels in order to provide the restricted access to the one or more parameters stored on the utility meter (3).

4. The method according to claim 3, **characterized in that** the parameters stored on the utility meter (3) are arranged in one or more parameter groups, each parameter group comprising two or more of the parameters, the electronic consumer communication device (2) being used so as to access parameters of those parameter groups corresponding to a selected predetermined access level.

5. The method according to any of the claims 1 to 4, **characterized in that** the method comprises the step of using the electronic consumer communication device (2) in order to transfer content of a display (6) of the utility meter (3) to a screen (7) of the electronic consumer communication device (2) such as to duplicate the content of the display (6) on the screen (7), the information transferred comprising the content of the display (6).

6. The method according to claim 5, **characterized in that** the method comprises the step of using the electronic consumer communication device (2) for having a machine-translation of the content of the display (6) and displaying the machine-translated content of the display (6) on the screen (7) of the electronic consumer communication device (2).

7. The method according to any of the claims 1 to 6, **characterized in that** the method comprises the step of using a wireless link between the electronic consumer communication device (2) and the electronic data transfer device (4) of the utility meter (3) in order to transfer the information, the wireless link being preferably a Bluetooth link established between the electronic consumer communication device (2) and the electronic data transfer device (4).

8. The method according to any of the claims 1 to 7, **characterized in that** the method comprises the step of using an app on the electronic consumer communication device (2) in order to transfer the information between the utility meter (3) and the electronic consumer communication device (2).

9. The method according to any of the claims 1 to 8, **characterized in that** the electronic consumer service communication device (2) is a dongle.

10. An app adapted to provide the method according to any of the claims 1 to 9 when running on the electronic consumer communication device (2).

## Patentansprüche

1. Verfahren zur Verbesserung der Installation oder Wartung eines Verbrauchszählers (3), nämlich eines Wärmemengenzählers, unter Verwendung der Übertragung von Informationen zwischen dem Verbrauchszähler (3) und einer elektronischen Verbraucher-Kommunikationsvorrichtung (2), nämlich einem Smartphone oder einem Tablet-Computer, zur Verwendung durch einen Servicetechniker, wobei die Übertragung der Informationen über eine elektronische Datenübertragungsvorrichtung (4) des Verbrauchszählers (3) erfolgt, wobei das Verfahren den Schritt des Verwendens der elektronischen Verbraucher-Kommunikationsvorrichtung (2) umfasst, um auf der elektronischen Verbraucher-Kommunikationsvorrichtung (2) von dem Verbrauchszähler (3) bereitgestellte Statusdaten zu empfangen, wobei die zwischen dem Verbrauchszähler (3) und der elektronischen Verbraucher-Kommunikationsvorrichtung (2) über die elektronische Datenübertragungsvorrichtung (4) des Verbrauchszählers (3) übertragenen Informationen die Statusdaten umfassen; und
Verwenden der elektronischen Verbraucher-Kommunikationsvorrichtung (2), um Anweisungsdaten für den Servicetechniker aus einer Anweisungsdatenbank zu erhalten, wobei die Anweisungsdaten von der Anweisungsdatenbank in Abhängigkeit von den Statusdaten erhalten werden, die von dem Verbrauchszähler (3) empfangen werden, wobei die Anweisungsdatenbank auf der elektronischen Verbraucher-Kommunikationsvorrichtung (2) gespeichert ist, **dadurch gekennzeichnet, dass** das Verfahren ferner die folgenden Schritte umfasst:
Verwenden der elektronischen Verbraucher-Kommunikationsvorrichtung (2), um eine virtuelle Adresse des Verbrauchszählers (3) mit einer physischen Adresse des Verbrauchszählers (3) über die elektronische Datenübertragungsvorrichtung (4) zu kombinieren, wobei die übertragenen Informationen die virtuelle Adresse des Verbrauchszählers (3) umfassen;
Verwenden der elektronischen Verbraucher-Kommunikationsvorrichtung (2), um die virtuelle Adresse des Verbrauchszählers (3) von dem Verbrauchszähler (3) über die elektronische Datenübertragungsvorrichtung (4) des Verbrauchszählers (3) an die elektronische Verbraucher-Kommunikationsvorrichtung (2) zu übertragen, um die virtuelle Adresse mit der physischen Adresse in einer gemeinsamen Adressenliste zu kombinieren, die auf der elektronischen Verbraucher-Kommunikationsvorrichtung (2) gespeichert ist; und
Bereitstellen einer physischen Adressenliste für die elektronische Verbraucher-Kommunikationsvorrichtung (2) vor dem Kombinieren und dem Schritt des Hinzufügens der virtuellen Adresse zu der physischen Adressenliste während dem Kombinieren, um die gemeinsame Adressenliste zu erstellen.

2. Verfahren nach Anspruch 1, **dadurch gekennzeichnet,**
**dass** die elektronische Verbraucher-Kommunikationsvorrichtung (2) einen eingeschränkten Zugriff auf einen oder mehrere Parameter hat, die auf dem Verbrauchszähler (3) gespeichert sind, wobei die übertragenen Informationen den Zugriff auf den einen oder die mehreren Parameter umfassen.

3. Verfahren nach Anspruch 2, **dadurch gekennzeichnet,**
**dass** die elektronische Verbraucher-Kommunikationsvorrichtung (2) eine oder mehrere vorbestimmte Zugriffsebenen bereitstellt, um den eingeschränkten Zugriff auf den einen oder die mehreren Parameter bereitzustellen, die auf dem Verbrauchszähler (3) gespeichert sind.

4. Verfahren nach Anspruch 3, **dadurch gekennzeichnet,**
**dass** die auf dem Verbrauchszähler (3) gespeicherten Parameter in einer oder mehreren Parametergruppen angeordnet sind, wobei jede Parametergruppe zwei oder mehr der Parameter umfasst, wobei die elektronische Verbraucher-Kommunikationsvorrichtung (2) verwendet wird, um auf die Parameter dieser Parametergruppen zuzugreifen, die einer ausgewählten vorbestimmten Zugriffsebene entsprechen.

5. Verfahren nach einem der Ansprüche 1 bis 4,
**dadurch gekennzeichnet, dass** das Verfahren den Schritt des Verwendens der elektronischen Verbraucher-Kommunikationsvorrichtung (2) umfasst, um einen Inhalt einer Anzeigevorrichtung (6) des Verbrauchszählers (3) auf einen Bildschirm (7) der elektronischen Verbraucher-Kommunikationsvorrichtung (2) zu übertragen, um so den Inhalt der Anzeigevorrichtung (6) auf dem Bildschirm (7) zu reproduzieren, wobei die übertragenen Informationen den Inhalt der Anzeigevorrichtung (6) umfassen.

6. Verfahren nach Anspruch 5, **dadurch gekennzeichnet,**
**dass** das Verfahren den Schritt des Verwendens der elektronischen Verbraucher-Kommunikationsvorrichtung (2) umfasst, um eine maschinelle Übersetzung des Inhalts der Anzeigevorrichtung (6) zu erhalten und den maschinell übersetzten Inhalt der Anzeigevorrichtung (6) auf dem Bildschirm (7) der elektronischen Verbraucher-Kommunikationsvorrichtung (2) anzuzeigen.

7. Verfahren nach einem der Ansprüche 1 bis 6,
**dadurch gekennzeichnet, dass** das Verfahren den Schritt des Verwendens einer drahtlosen Verbindung zwischen der elektronischen Verbraucher-Kommunikationsvorrichtung (2) und der elektronischen Datenübertragungsvorrichtung (4) des Verbrauchszählers (3) umfasst, um die Informationen zu übertragen, wobei die drahtlose Verbindung vorzugsweise eine zwischen der elektronischen Verbraucher-Kommunikationsvorrichtung (2) und der elektronischen Datenübertragungsvorrichtung (4) hergestellte Bluetooth-Verbindung ist.

8. Verfahren nach einem der Ansprüche 1 bis 7,
**dadurch gekennzeichnet, dass** das Verfahren den Schritt des Verwendens einer App auf der elektronischen Verbraucher-Kommunikationsvorrichtung (2) umfasst, um die Informationen zwischen dem Verbrauchszähler (3) und der elektronischen Verbraucher-Kommunikationsvorrichtung (2) zu übertragen.

9. Verfahren nach einem der Ansprüche 1 bis 8,
**dadurch gekennzeichnet, dass** die elektronische Verbraucher-Service-Kommunikationsvorrichtung (2) ein Dongle ist.

10. App, die dazu vorgesehen ist, das Verfahren nach einem der Ansprüche 1 bis 9 bereitzustellen, wenn sie auf der elektronischen Verbraucher-Kommunikationsvorrichtung (2) ausgeführt wird.

## Revendications

1. Procédé d'amélioration de l'installation ou de la maintenance d'un compteur de service d'utilité publique (3), à savoir d'un compteur de chaleur de service d'utilité publique, à l'aide d'un transfert d'informations entre le compteur de service d'utilité publique (3) et un dispositif de communication électronique grand public (2), à savoir un smartphone ou une tablette électronique, destiné à être utilisé par un technicien de maintenance, le transfert des informations s'effectuant par le biais d'un dispositif électronique de transfert de données (4) du compteur de service d'utilité publique (3), le procédé comprenant l'étape d'utilisation du dispositif de communication électronique grand public (2) dans le but de recevoir, sur le dispositif de communication électronique grand public (2), des données d'état fournies par le compteur de service d'utilité publique (3), les informations qui sont transférées entre le compteur de service d'utilité publique (3) et le dispositif de communication électronique grand public (2) par le biais du dispositif électronique de transfert de données (4) du compteur de service d'utilité publique (3) comprenant les données d'état ;
et
l'utilisation du dispositif de communication électronique grand public (2) dans le but d'obtenir des données d'instruction pour le technicien de maintenance à partir d'une base de données d'instructions, les données d'instruction obtenues à partir de la base de données d'instructions dépendant des données d'état reçues depuis le compteur de service d'utilité publique (3), la base de données d'instructions étant enregistrée sur le dispositif de communication électronique grand public (2), le procédé étant **caractérisé en ce qu'**il comprend en outre les étapes suivantes
l'utilisation du dispositif de communication électronique grand public (2) dans le but d'appairer une adresse virtuelle du compteur de service d'utilité publique (3) avec une adresse physique du compteur de service d'utilité publique (3) par le biais du dispositif électronique de transfert de données (4), les informations transférées comprenant l'adresse virtuelle du compteur de service d'utilité publique (3),
l'utilisation du dispositif de communication électronique grand public (2) dans le but de transférer l'adresse virtuelle du compteur de service d'utilité publique (3) depuis le compteur de service d'utilité publique (3), par le biais du dispositif électronique de transfert de données (4) du compteur de service d'utilité publique (3), jusqu'au dispositif de communication électronique grand public (2) dans le but d'appairer l'adresse virtuelle avec l'adresse physique dans une liste d'adresses conjointes enregistrée sur le dispositif de communication électronique grand public (2), et
la fourniture de la liste d'adresses physiques au dispositif de communication électronique grand public (2) préalablement à l'appairage et l'étape d'ajout de l'adresse virtuelle à la liste d'adresses physiques durant l'appairage dans le but de créer la liste d'adresses conjointes.

2. Procédé selon la revendication 1, **caractérisé en ce que** le dispositif de communication électronique grand public (2) dispose d'un accès restreint à un ou plusieurs paramètres enregistrés sur le compteur de service d'utilité publique (3), les informations transférées comprenant l'accès aux un ou plusieurs paramètres.

3. Procédé selon la revendication 2, **caractérisé en ce que** le dispositif de communication électronique grand public (2) fournit un ou plusieurs niveaux d'accès prédéterminés dans le but de fournir l'accès restreint aux un ou plusieurs paramètres enregistrés sur le compteur de service d'utilité publique (3).

4. Procédé selon la revendication 3, **caractérisé en ce que** les paramètres enregistrés sur le compteur de service d'utilité publique (3) sont agencés en un ou plusieurs groupes de paramètres, chaque groupe de paramètres comprenant au moins deux des paramètres, le dispositif de communication électronique grand public (2) étant utilisé de manière à accéder à des paramètres de ceux des groupes de paramètres qui correspondent à un niveau d'accès prédéterminé sélectionné.

5. Procédé selon l'une quelconque des revendications 1 à 4, le procédé étant **caractérisé en ce qu'**il comprend l'étape d'utilisation du dispositif de communication électronique grand public (2) dans le but de transférer un contenu d'un affichage (6) du compteur de service d'utilité publique (3) vers un écran (7) du dispositif de communication électronique grand public (2) de sorte à dupliquer le contenu de l'affichage (6) sur l'écran (7), les informations transférées comprenant le contenu de l'affichage (6).

6. Procédé selon la revendication 5, le procédé étant **caractérisé en ce qu'**il comprend l'étape d'utilisation du dispositif de communication électronique grand public (2) pour disposer d'une traduction par machine du contenu de l'affichage (6) et afficher le contenu traduit par machine de l'affichage (6) sur l'écran (7) du dispositif de communication électronique grand public (2).

7. Procédé selon l'une quelconque des revendications 1 à 6, le procédé étant **caractérisé en ce qu'**il comprend l'étape d'utilisation une liaison sans fil entre le dispositif de communication électronique grand public (2) et le dispositif électronique de transfert de données (4) du compteur de service d'utilité publique (3) dans le but de transférer les informations, la liaison sans fil étant de préférence une liaison Bluetooth établie entre le dispositif de communication électronique grand public (2) et le dispositif électronique de transfert de données (4).

8. Procédé selon l'une quelconque des revendications 1 à 7, le procédé étant **caractérisé en ce qu'**il comprend l'étape d'utilisation d'une application sur le dispositif de communication électronique grand public (2) dans le but de transférer les informations entre le compteur de service d'utilité publique (3) et le dispositif de communication électronique grand public (2).

9. Procédé selon l'une quelconque des revendications 1 à 8, **caractérisé en ce que** le dispositif de communication électronique grand public (2) est un dongle.

10. Application adaptée à fournir le procédé selon l'une quelconque des revendications 1 à 9 lorsqu'elle est exécutée sur le dispositif de communication électronique grand public (2).
